# EUROPEAN PATENT APPLICATION

(11) **EP 2 092 847 A1**
(43) Date of publication of application: **26.08.2009**
(21) Application number: 07816831.7
(22) Date of filing: 15.11.2007
(51) Int. Cl.: A47B 47/00, F16B 12/00

(54) **A SELF-LOCKING JOINT FOR AN EXPANDING-TIGHTEN TYPE SHELF**

(30) Priority: 18.11.2006 CN 200620067991 U
(71) Applicant: Liang, Jingsong, Pengjiang District Jiangmen Guangdong 529-000 (CN)
(72) Inventor: Liang, Jingsong, Pengjiang District Jiangmen Guangdong 529-000 (CN)
(74) Representative: Gervasi, Gemma
(86) International application number: PCT/CN2007/003222
(87) International publication number: WO 2008/058468

(57) **Abstract**

A self-locking joint for an expanding-tighten type shelf includes a supporting plate (1) as a U-shaped slot and a plastic supporting block (2) inserted in the U-shaped slot. In the slot there are concave-convex self-locking device (3) at two sides of the slot for preventing the supporting block from detaching. The U-shaped slot accepting the plastic-supporting block is applied in the structure. The shelf is secured elastically on the column of the frame due to the elasticity of the supporting block. In the invention it is convenient to assembly or dismantle the shelf without a special tool. The stucture could be self-locked tightly and could not be loosen easily.

## Description

### TECHNICAL FIELD

The present invention relates to a self-locking joint for an expanding-tighten type shelf, and in particular to a self-locking joint for an expanding-tighten type shelf which is removable and adapted to carry goods.

### BACKGROUND OF THE INVENTION

Normally, an expanding-tighten type shelf which is removable and adapted to carry goods mainly comprises side posts and shelf layers mounted among the side posts. The connecting means between the side post and the shelf layer generally includes sleeve joint and lap joint, and if assembly problems occur, special tools and mounting technic are required. In an expanding-tighten type shelf, the shelf layer is jointed to the side post by using a Y-shaped joint of a metal semicircular pipe, and during assembly, the shelf layer is pressed into the side post, which may spoil the appearance. Furthermore, since the fastening of this structure only relies on the friction and supporting force, once the error distance between two side posts is relative large, the shelf could not be tightened by expanding such that the shelf layer may become loose, which raises many problems of after service and affects the sales. Therefore, an expanding-tighten type joint which can be assembled and disassembled without using a special tool and the occurring of damage to the appearance and which is self-locking to enable the shelf layer not to become loose easily is desired.

### SUMMARY OF THE INVENTION

Having outlined the state of the prior art and its attendant shortages, it is an object of the present invention to provide a self-locking joint for an expanding-tighten type shelf which can be assembled and disassembled without using a special tool and the occurring of damage to the appearance and which is self-locking to enable the shelf layer not to become loose easily.

The above object of the present invention is achieved by the following technical solutions:

A self-locking joint for an expanding-tighten type shelf, comprising a supporting plate and a plastic supporting block inserted in the supporting plate, wherein the supporting plate forms a U-shaped slot, the plastic supporting block is inserted in the U-shaped slot and has a concave surface for matching with the shape of a post of the shelf, a concave-convex self-locking device is provided at two sides of the U-shaped slot for preventing the supporting block from detaching, and the concave-convex self-locking device is of a distance from the bottom of the U-shaped slot. The post of the shelf may be a square cross-sectional or cylindrical post, corresponding to which the concave surface of the plastic supporting block is also square cross-sectional or cylindrical.

As an improvement to the concave-convex self-locking device of the present invention, the concave-convex self-locking device may comprise elastic locking pieces respectively protruded from the two sides of the U-shaped slot and inclined towards the bottom of the U-shaped slot, each of the elastic locking pieces has a free end having a distance from the bottom of the U-shaped slot, recesses corresponding to the positions of the elastic locking pieces are provided respectively on the two sides of the plastic supporting block, the recess is of a size adapted to be completely contained in the elastic locking piece, and the free end of the elastic locking piece leans on the bottom of the recess to lock the plastic supporting block when the plastic supporting block is inserted in the U-shaped slot.

Preferably, the recess of the plastic supporting block may be a L-shaped recess with a bottom ending at a position corresponding to the free end of the elastic locking piece.

Alternatively, the recess of the plastic supporting block may be a "∠"-shaped recess with a bottom ending at a position corresponding to the free end of the elastic locking piece.

As another improvement to the concave-convex self-locking device of the present invention, the concave-convex self-locking device may comprise through holes respectively on the two sides of the U-shaped slot, each of the through holes is of a distance from the bottom of the U-shaped slot, wedge-shaped protrusions corresponding to the positions of the through holes are provided respectively on the two sides of the plastic supporting block, the wedge-shaped protrusion is of an extended surface in the direction of pressing the protrusion into the U-shaped slot and a size adapted to be completely contained in the through holes, and the wedge-shaped protrusion is clasped in the through hole to lock the plastic supporting block when the plastic supporting block is inserted in the U-shaped slot.

As another improvement to the concave-convex self-locking device of the present invention, the concave-convex self-locking device may comprise recesses respectively on the two sides of the U-shaped slot, each of the recesses is of a distance from the bottom of the U-shaped slot, wedge-shaped protrusions corresponding to the positions of the recesses are provided respectively on the two sides of the plastic supporting block, the wedge-shaped protrusion is of an extended surface in the direction of pressing the protrusion into the U-shaped slot and a size adapted to be completely contained in the recess, and the wedge-shaped protrusion is clasped in the recess to lock the plastic supporting block when the plastic supporting block is inserted in the U-shaped slot.

Preferably, the wedge-shaped protrusion is ball crown-shaped.

Alternatively, the wedge-shaped protrusion is inverted triangle-shaped.

In all the above technical solutions, a self-locking protrusion may be provided on the concave surface of the plastic supporting block. The self-locking protrusion may be ball crown-shaped or protruded piece-shaped, and correspondingly a recess for receiving the protrusion is provided on the side post to further fasten the plastic supporting block to ensure the stability of the shelf.

In all the above technical solutions, hems for retaining the plastic supporting block may be provided respectively on the two ends of the U-shaped slot. The hem could prevent the concave-convex self-locking device from overloading and thus damage.

With the above-described technical solutions, the present invention is of the following advantages:

For the U-shaped slot containing the plastic supporting block is used, the back of the supporting plate could be welded to each of the four corners of the shelf layer, and the shelf layer could be tightened by the expanding of the plastic supporting block which is of elasticity, so that the dimension error may be eliminated. In order to stable the plastic supporting block, the plastic supporting block is contained in the U-shaped slot and is prevented from detaching by the concave-convex self-locking device, and the hem hems for retaining the plastic supporting block on the two ends of the U-shaped slot could prevent the concave-convex self-locking device from overloading and thus damage. Furthermore, the self-locking protrusion may be provided between the plastic supporting block and the side post to prevent the up and down movement thereof, and when assembly, the shelf layer is pressed into the side post, and the self-locking protrusion is inserted into the recess on the side post to realize the locking, whch is easy to operate, and even when the distance error between two posts is relative large, the shelf layer will not become loose easily. The plastic supporting block is replaceable and can prevent the side post from being scraped. Thus, the present invention can be assembled and disassembled easily without using a special tool and the occurring of damage to the appearance and which enables the shelf layer not to become loose easily.

### BRIEF DESCRIPTION OF THE DRAWINGS

Fig. 1 is a schematic sectional view showing a self-locking joint which is of a concave-convex self-locking device having elastic locking pieces and L-shaped recesses;
Fig. 2 is a schematic assembly view of the self-locking joint as shown in Fig. 1;
Fig. 3 is another schematic view showing a self-locking joint which is of a concave-convex self-locking device having elastic locking pieces and L-shaped recesses;
Fig. 4 is a schematic assembly view of the self-locking joint as shown in Fig. 3;
Fig. 5 is another schematic view showing a self-locking joint which is of a concave-convex self-locking device having elastic locking pieces and L-shaped recesses;
Fig. 6 is a schematic assembly view of the self-locking joint as shown in Fig. 5;
Fig. 7 is a schematic view showing a self-locking joint which is of a concave-convex self-locking device having elastic locking pieces and "∠"-shaped recesses;
Fig. 8 is a schematic assembly view of the self-locking joint as shown in Fig. 7;
Fig. 9 is a schematic view showing a self-locking joint which is of a concave-convex self-locking device having wedge-shaped protrusions and through holes;
Fig. 10 is a schematic assembly view of the self-locking joint as shown in Fig. 9;
Fig. 11 is another schematic view showing a self-locking joint which is of a concave-convex self-locking device having wedge-shaped protrusions and through holes;
Fig. 12 is a schematic assembly view of the self-locking joint as shown in Fig. 11;
Fig. 13 is a schematic view showing a self-locking joint which is of a concave-convex self-locking device having wedge-shaped protrusions and recesses;
Fig. 14 is a schematic assembly view of the self-locking joint as shown in Fig. 13;
Fig. 15 is another schematic view showing a self-locking joint which is of a concave-convex self-locking device having wedge-shaped protrusions and recesses;
Fig. 16 is a schematic assembly view of the self-locking joint as shown in Fig. 15;
Fig. 17 is a schematic view showing a self-locking protrusion on the concave surface of the plastic supporting block;
Fig. 18 is another schematic view showing a self-locking protrusion on the concave surface of the plastic supporting block;
Fig. 19 is a perspective view of an expanding-tighten type shelf with the self-locking joint;
Fig. 20 is an exploded view of the expanding-tighten type shelf shown in Fig. 19.

### DETAILED DESCRIPTION OF THE INVENTION

The present invention will further described in the following embodiments accompanying with the drawings.

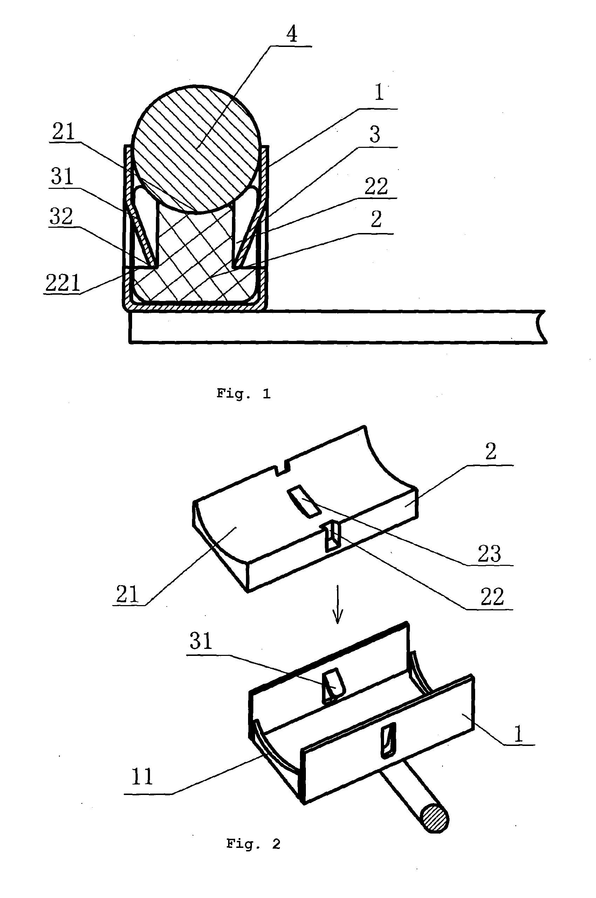

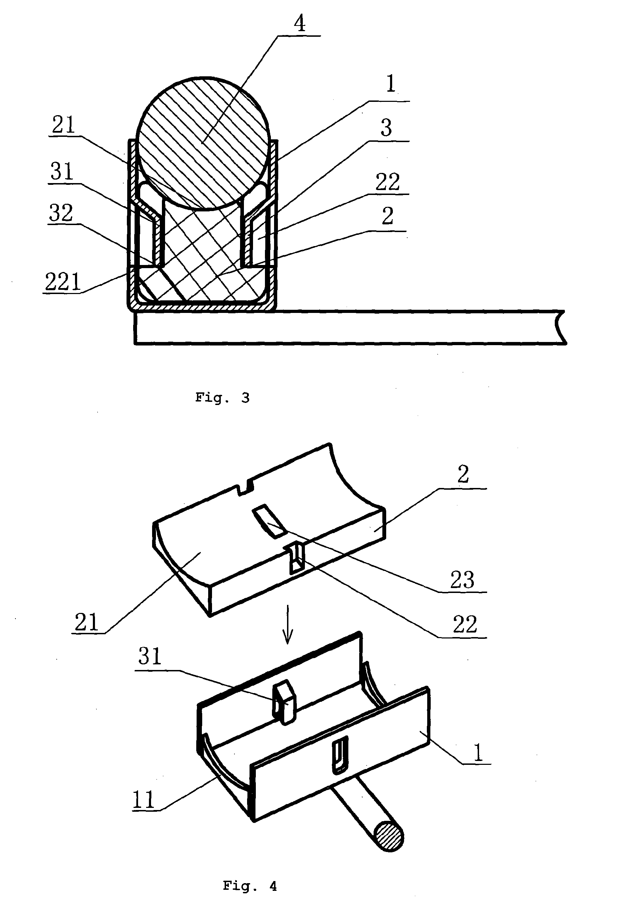

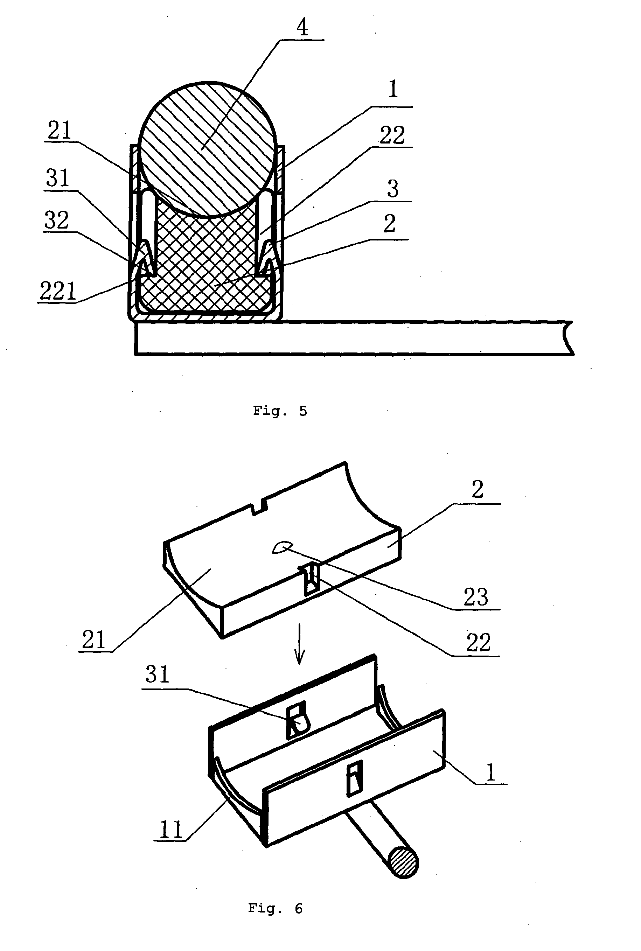

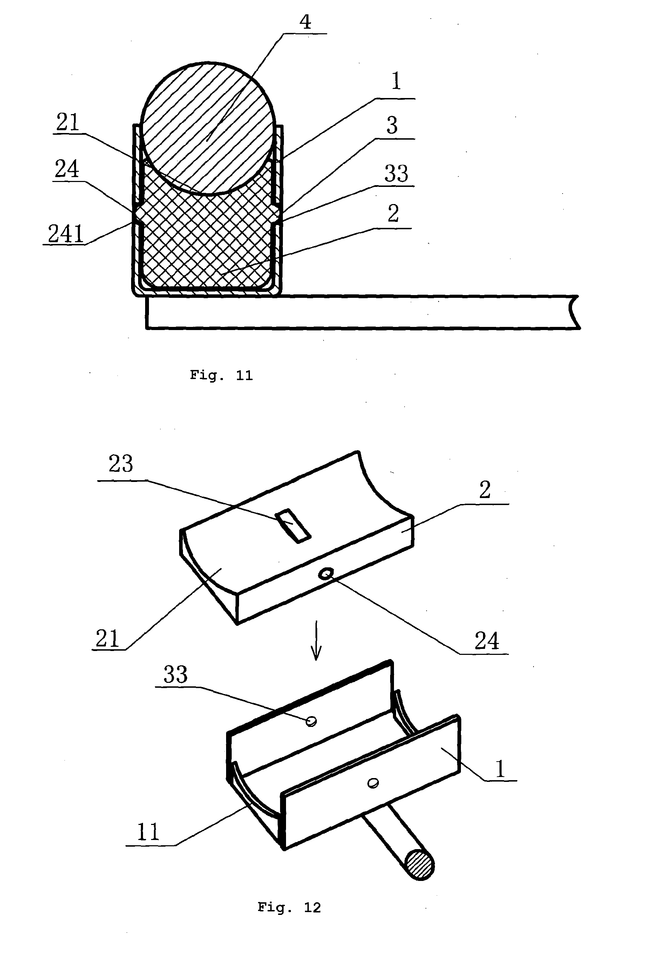

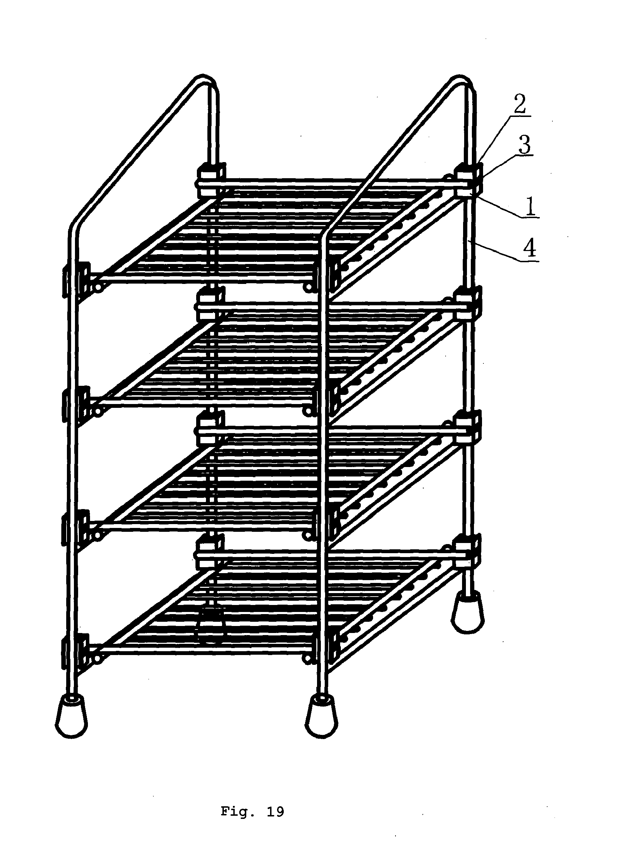

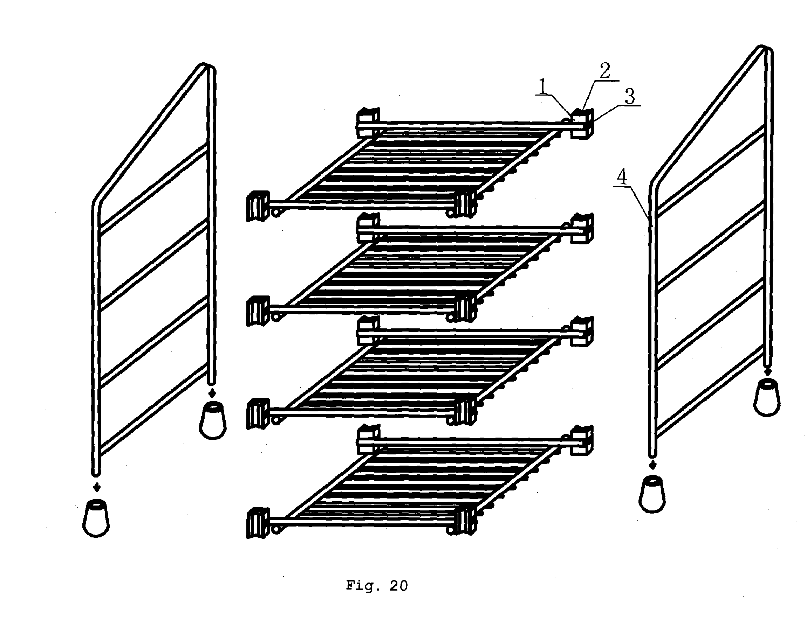

Referring to Figs. 1 to 20, a self-locking joint for an expanding-tighten type shelf comprises: a supporting plate 1 forming a U-shaped slot; a plastic supporting block 2 inserted in the U-shaped slot and having a concave surface 21 for matching with the shape of the post 4 of the shelf; and a concave-convex self-locking device 3 at two sides of the U-shaped slot for preventing the supporting block from detaching, the concave-convex self-locking device being of a distance from the bottom of the U-shaped slot. The post of the shelf may be a square cross-sectional or cylindrical post, corresponding to which the concave surface of the plastic supporting block is also square cross-sectional or cylindrical.

As an improvement to the concave-convex self-locking device, as shown in Figs. 1 to 8, the concave-convex self-locking device 3 comprises elastic locking pieces 31 respectively protruded from the two sides of the U-shaped slot and inclined towards the bottom of the U-shaped slot, each of the elastic locking pieces has a free end 32 having a distance from the bottom of the U-shaped slot, the distance is sufficient to fasten the plastic supporting block 2, recesses 22 corresponding to the positions of the elastic locking pieces 31 are provided respectively on the two sides of the plastic supporting block 2, the recess 22 is of a size adapted to be completely contained in the elastic locking piece 31, and the free end 32 of the elastic locking piece 31 leans on the bottom 221 of the recess 22 to lock the plastic supporting block when the plastic supporting block 2 is inserted in the U-shaped slot.

Referring to Figs. 1 to 6, the recess 22 of the plastic supporting block 2 is a L-shaped recess with a bottom ending at a position corresponding to the free end 32 of the elastic locking piece 31. When the plastic supporting block 2 is inserted in the U-shaped slot, the free end 32 of the elastic locking piece 31 leans on the bottom 221 of the recess 22 to lock the plastic supporting block.

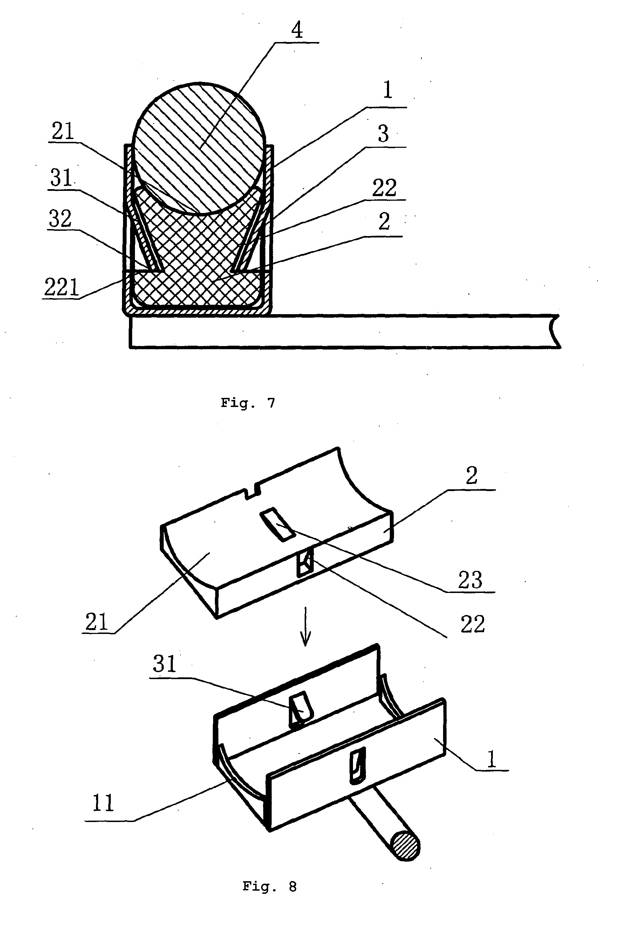

Referring to Figs. 7, 8, the recess 22 of the plastic supporting block 2 is a "∠"-shaped recess with a bottom ending at a position corresponding to the free end 32 of the elastic locking piece 31. When the plastic supporting block 2 is inserted in the U-shaped slot, the free end 32 of the elastic locking piece 31 leans on the bottom 221 of the "∠"-shaped recess 22 to lock the plastic supporting block.

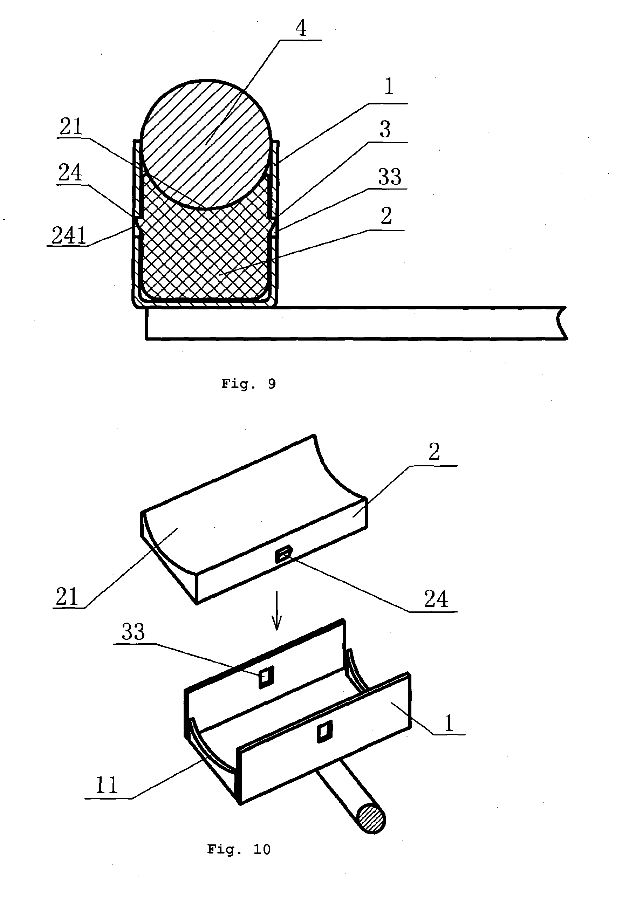

As another improvement to the concave-convex self-locking device, as shown in Figs. 9 to 12, the concave-convex self-locking device 3 comprises through holes 33 respectively on the two sides of the U-shaped slot, each of the through holes is of a distance from the bottom of the U-shaped slot, wedge-shaped protrusions 24 corresponding to the positions of the through holes 33 are provided respectively on the two sides of the plastic supporting block 2, the wedge-shaped protrusion 24 is of an extended surface 24 in the direction of pressing the protrusion into the U-shaped slot and a size adapted to be completely contained in the through holes 33, and the wedge-shaped protrusion 24 is clasped in the through hole 33 to lock the plastic supporting block when the plastic supporting block 2 is inserted in the U-shaped slot. The through hole 33 may be square or ball crown-shaped.

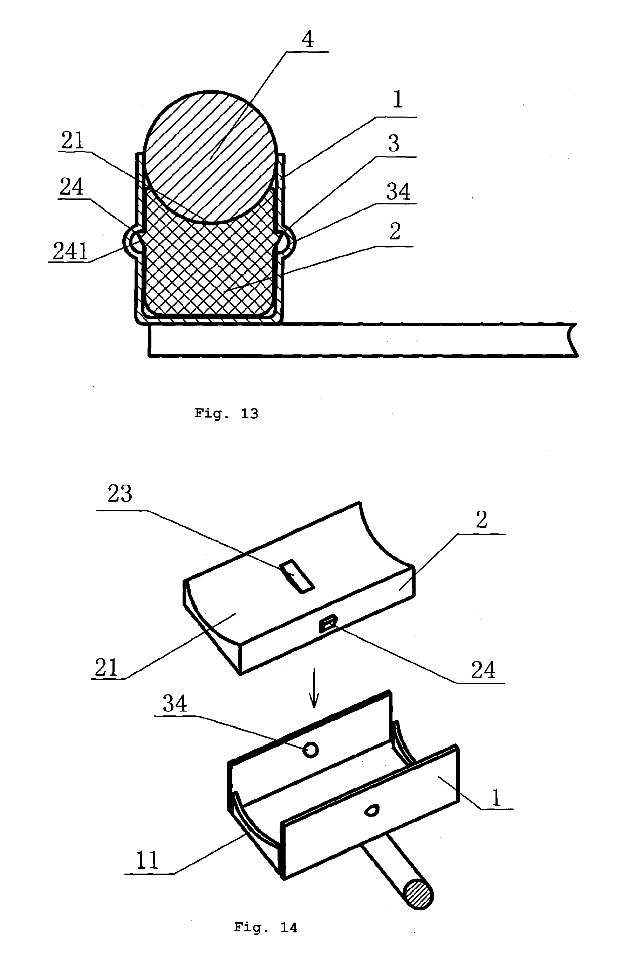

As another improvement to the concave-convex self-locking device, as shown in Figs. 13 to 16, the concave-convex self-locking device 3 comprises recesses 34 respectively on the two sides of the U-shaped slot, each of the recesses is of a distance from the bottom of the U-shaped slot, wedge-shaped protrusions 24 corresponding to the positions of the recesses 34 are provided respectively on the two sides of the plastic supporting block 2, the wedge-shaped protrusion 24 is of an extended surface 24 in the direction of pressing the protrusion into the U-shaped slot and a size adapted to be completely contained in the recess 34, and the wedge-shaped protrusion 24 is clasped in the recess 34 to lock the plastic supporting block when the plastic supporting block 2 is inserted in the U-shaped slot. The recess 34 may be square or ball crown-shaped.

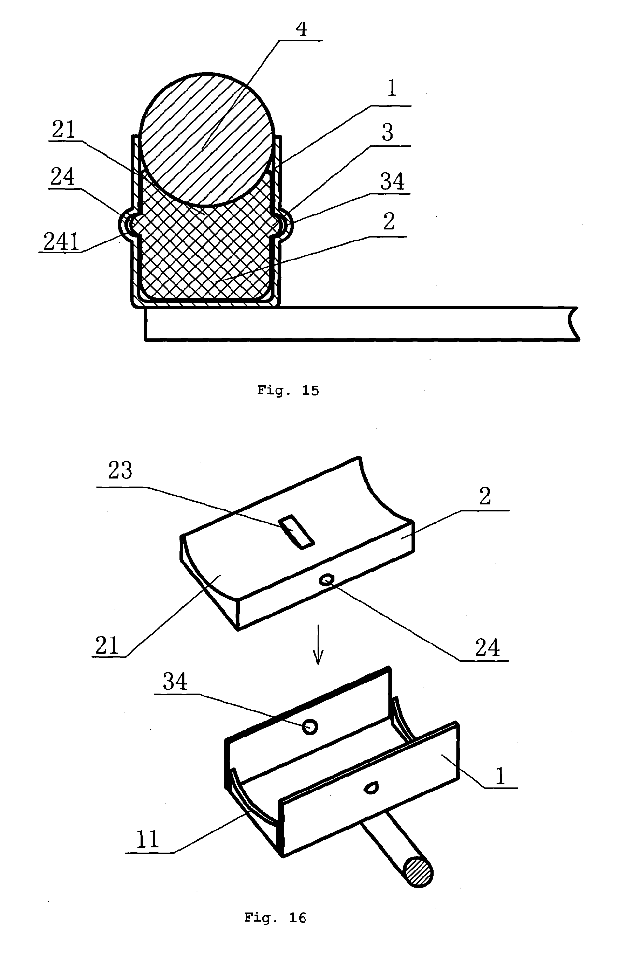

Referring to Figs. 15, 16, the wedge-shaped protrusion 24 is ball crown-shaped, and correspondingly the through hole 33 or recess 34 may be ball crow-shaped. When the plastic supporting block 2 is inserted in the U-shaped slot, the ball crown-shaped protrusion 24 is clasped in the through hole 33 or recess 34 to lock the plastic supporting block.

Referring to Figs. 13, 14, the wedge-shaped protrusion 24 is inverted triangle-shaped, and correspondingly the through hole 33 or recess 34 may be square. When the plastic supporting block 2 is inserted in the U-shaped slot, the inverted triangle-shaped protrusion 24 is clasped in the through hole 33 or recess 34 to lock the plastic supporting block.

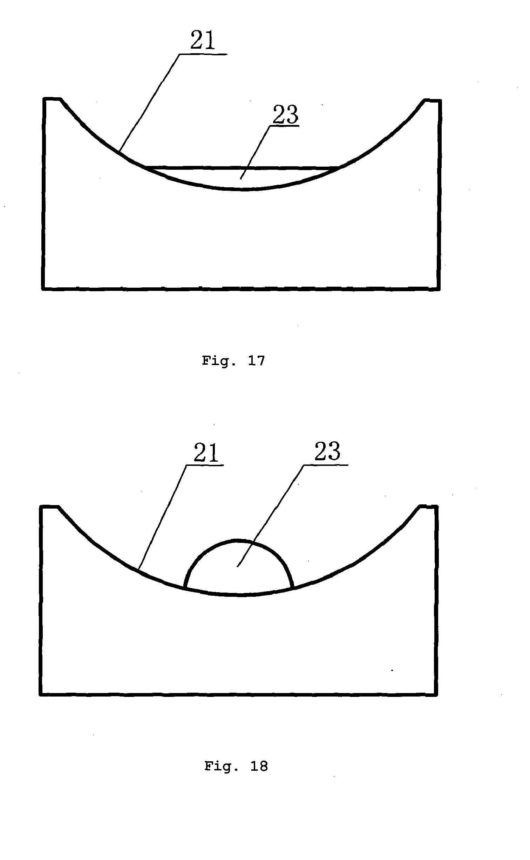

In all the above technical solutions, a self-locking protrusion 23 may be provided on the concave surface 21 of the plastic supporting block 2. The self-locking protrusion 23 may be a ball crown-shaped, as shown in Fig. 18, or protruded piece, as shown in Fig. 17.

In all the above technical solutions, hems 11 for retaining the plastic supporting block 2 are provided respectively on the two ends of the U-shaped slot. The hem could prevent the concave-convex self-locking device from overloading and thus damage.

## Claims

1. A self-locking joint for an expanding-tighten type shelf, comprising a supporting plate (1) and a plastic supporting block (2) inserted in the supporting plate (1), **characterized in that**: the supporting plate (1) forms a U-shaped slot, the plastic supporting block (2) is inserted in the U-shaped slot and has a concave surface (21) for matching with the shape of a post (4) of the shelf, a concave-convex self-locking device (3) is provided at two sides of the U-shaped slot for preventing the supporting block from detaching, and the concave-convex self-locking device is of a distance from the bottom of the U-shaped slot.

2. The self-locking joint of claim 1, **characterized in that** the concave-convex self-locking device (3) comprises elastic locking pieces (31) respectively protruded from the two sides of the U-shaped slot and inclined towards the bottom of the U-shaped slot, each of the elastic locking pieces has a free end (32) having a distance from the bottom of the U-shaped slot, recesses (22) corresponding to the positions of the elastic locking pieces (31) are provided respectively on the two sides of the plastic supporting block (2), the recess (22) is of a size adapted to be completely contained in the elastic locking piece (31), and the free end (32) of the elastic locking piece (31) leans on the bottom (221) of the recess (22) to lock the plastic supporting block when the plastic supporting block (2) is inserted in the U-shaped slot.

3. The self-locking joint of claim 2, **characterized in that** the recess (22) of the plastic supporting block (2) is a L-shaped recess with a bottom ending at a position corresponding to the free end (32) of the elastic locking piece (31).

4. The self-locking joint of claim 2, **characterized in that** the recess (22) of the plastic supporting block (2) is a "∠"-shaped recess with a bottom ending at a position corresponding to the free end (32) of the elastic locking piece (31).

5. The self-locking joint of claim 1, **characterized in that** the concave-convex self-locking device (3) comprises through holes (33) respectively on the two sides of the U-shaped slot, each of the through holes is of a distance from the bottom of the U-shaped slot, wedge-shaped protrusions (24) corresponding to the positions of the through holes (33) are provided respectively on the two sides of the plastic supporting block (2), the wedge-shaped protrusion (24) is of an extended surface (24) in the direction of pressing the protrusion into the U-shaped slot and a size adapted to be completely contained in the through holes (33), and the wedge-shaped protrusion (24) is clasped in the through hole (33) to lock the plastic supporting block when the plastic supporting block (2) is inserted in the U-shaped slot.

6. The self-locking joint of claim 1, **characterized in that** the concave-convex self-locking device (3) comprises recesses (34) respectively on the two sides of the U-shaped slot, each of the recesses is of a distance from the bottom of the U-shaped slot, wedge-shaped protrusions (24) corresponding to the positions of the recesses (34) are provided respectively on the two sides of the plastic supporting block (2), the wedge-shaped protrusion (24) is of an extended surface (24) in the direction of pressing the protrusion into the U-shaped slot and a size adapted to be completely contained in the recess (34), and the wedge-shaped protrusion (24) is clasped in the recess (34) to lock the plastic supporting block when the plastic supporting block (2) is inserted in the U-shaped slot.

7. The self-locking joint of claim 5 or 6, **characterized in that** the wedge-shaped protrusion (24) is ball crown-shaped.

8. The self-locking joint of claim 5 or 6, **characterized in that** the wedge-shaped protrusion (24) is inverted triangle-shaped.

9. The self-locking joint according to any one of claims 1 to 6, **characterized in that** a self-locking protrusion (23) is provided on the concave surface (21) of the plastic supporting block (2).

10. The self-locking joint according to any one of claims 1 to 6, **characterized in that** hems (11) for retaining the plastic supporting block (2) are provided respectively on the two ends of the U-shaped slot.

11. The self-locking joint of claim 9, **characterized in that** hems (11) for retaining the plastic supporting block (2) are provided respectively on the two ends of the U-shaped slot.

## Amended claims

### Amended claims under Art. 19.1 PCT

**1.** A self-locking joint for an expanding-tighten type shelf, comprising:
a supporting plate (1) forming a U-shaped slot;
a plastic supporting block (2) inserted in the U-shaped slot and having a concave surface (21) for matching with the shape of the post (4) of the shelf; and
a concave-convex self-locking device (3) at two sides of the U-shaped slot for preventing the supporting block from detaching, the concave-convex self-locking device being of a distance from the bottom of the U-shaped slot;
**characterized in that:** the concave-convex self-locking device (3) comprises elastic locking pieces (31) respectively protruded from the two sides of the U-shaped slot and inclined towards the bottom of the U-shaped slot, each of the elastic locking pieces has a free end (32) having a distance from the bottom of the U-shaped slot, recesses (22) corresponding to the positions of the elastic locking pieces (31) are provided respectively on the two sides of the plastic supporting block (2), the recess (22) is of a size adapted to be completely contained in the elastic locking piece (31), and the free end (32) of the elastic locking piece (31) leans on the bottom (221) of the recess (22) to lock the plastic supporting block when the plastic supporting block (2) is inserted in the U-shaped slot.

**2.** The self-locking joint of claim 1, **characterized in that** the recess (22) of the plastic supporting block (2) is a L-shaped recess with a bottom ending at a position corresponding to the free end (32) of the elastic locking piece (31).

**3.** The self-locking joint of claim 1, **characterized in that** the recess (22) of the plastic supporting block (2) is an acute angle-shaped recess with a bottom ending at a position corresponding to the free end (32) of the elastic locking piece (31).

**4.** A self-locking joint for an expanding-tighten type shelf, comprising:
a supporting plate (1) forming a U-shaped slot;
a plastic supporting block (2) inserted in the U-shaped slot and having a concave surface (21) for matching with the shape of the post (4) of the shelf; and
a concave-convex self-locking device (3) at two sides of the U-shaped slot for preventing the supporting block from detaching, the concave-convex self-locking device being of a distance from the bottom of the U-shaped slot;
**characterized in that**: the concave-convex self-locking device (3) comprises through holes (33) respectively on the two sides of the U-shaped slot, each of the through holes is of a distance from the bottom of the U-shaped slot, wedge-shaped protrusions (24) corresponding to the positions of the through holes (33) are provided respectively on the two sides of the plastic supporting block (2), the wedge-shaped protrusion (24) is of an expanded surface (24) in the direction of pressing the protrusion into the U-shaped slot and a size adapted to be completely contained in the through holes (33), and the wedge-shaped protrusion (24) is clasped in the through hole (33) to lock the plastic supporting block when the plastic supporting block (2) is inserted in the U-shaped slot.

**5.** A self-locking joint for an expanding-tighten type shelf, comprising:
a supporting plate (1) forming a U-shaped slot;
a plastic supporting block (2) inserted in the U-shaped slot and having a concave surface (21) for matching with the shape of the post (4) of the shelf; and
a concave-convex self-locking device (3) at two sides of the U-shaped slot for preventing the supporting block from detaching, the concave-convex self-locking device being of a distance from the bottom of the U-shaped slot;
**characterized in that**: the concave-convex self-locking device (3) comprises recesses (34) respectively on the two sides of the U-shaped slot, each of the recesses is of a distance from the bottom of the U-shaped slot, wedge-shaped protrusions (24) corresponding to the positions of the recesses (34) are provided respectively on the two sides of the plastic supporting block (2), the wedge-shaped protrusion (24) is of an expanded surface (24) in the direction of pressing the protrusion into the U-shaped slot and a size adapted to be completely contained in the recess (34), and the wedge-shaped protrusion (24) is clasped in the recess (34) to lock the plastic supporting block when the plastic supporting block (2) is inserted in the U-shaped slot.

**6.** The self-locking joint of claim 4 or 5, **characterized in that** the wedge-shaped protrusion (24) is ball crown-shaped.

**7.** The self-locking joint of claim 4 or 5, **characterized in that** the wedge-shaped protrusion (24) is inverted triangle-shaped.

**8.** The self-locking joint according to any one of claims 1 to 5, **characterized in that** a self-locking protrusion (23) is provided on the concave surface (21) of the plastic supporting block (2).

**9.** The self-locking joint according to any one of claims 1 to 5, **characterized in that** hems (11) for retaining the plastic supporting block (2) are provided respectively on the two ends of the U-shaped slot.

**10.** The self-locking joint of claim 8, **characterized in that** hems (11) for retaining the plastic supporting block (2) are provided respectively on the two ends of the U-shaped slot.
